# EUROPÄISCHE PATENTANMELDUNG

(11) **EP 1 675 070 A2**
(43) Veröffentlichungstag der Anmeldung: **28.06.2006**
(21) Anmeldenummer: 06008007.4
(22) Anmeldetag: 14.07.2000
(51) Int. Cl.: G07C 9/00

(54) **Verfahren und System zur Autorisierung einer kommerziellen Transaktion**

(62) Teilanmeldung aus: 00115309.7
(71) Anmelder: VOICE.TRUST AG, 81379 München (DE)
(72) Erfinder: Kramer, Michael, 82313 Gauting (DE); Tacke, Jörg, 82319 Starnberg (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zur Authorisation einer Transaktion eines Kunden durch einen Authorisierungsdienstleister, wobei der Authorisierungsdienstleister in einem Speicher ein einer Kennung des Kunden zugeordnetes Referenzstimmuster des Kunden gespeichert hat, umfassend:
Aufbauen einer Kommunikationsverbindung zwischen einem Kunden und dem Authorisierungsdienstleister;
Übermitteln einer Kennung von dem Kunden zu dem Authorisierungsdienstleister;
Übermitteln einer vom Authorisierungsdienstleister erzeugten, dem Kunden vorher nicht bekannten Wortfolge an den Kunden;
Nachsprechen der Wortfolge und übermitteln der nachgesprochenen Wortfolge von dem Kunden an den Authorisierungsdienstleister;
Vergleichen der nachgesprochenen Wortfolge und des der übermittelten Kennung zugeordneten gespeicherten Referenzstimmusters auf Übereinstimmung hinsichtlich charakteristischer Stimmerkmale;
Authorisieren einer Transaktion des Kunden, wenn die Übereinstimmung zwischen der nachgesprochenen Wortfolge und des der übermittelten Kennung zugeordneten gespeicherten Referenzstimmusters größer als ein vorbestimmter Schwellenwert ist.

## Beschreibung

Die vorliegende Erfindung betrifft ein Verfahren sowie ein System zur Authorisierung einer kommerziellen Transaktion zwischen einem Kunden und einem Waren- oder Dienstleistungsanbieter durch einen Authorisierungsdienstleister mit Authentifizierung des Kunden durch Vergleich einer biometrischen Probe des Kunden mit einem beim Authorisierungsdienstleister gespeicherten biometrischen Muster des Kunden.

Aufgrund des umfassenden Einsatzes von elektronischen Datenverarbeitungsanlagen im Zahlungsverkehr, kommen verstärkt Systeme zur Identifizierung und/oder zur Authentifizierung von Personen vor der Durchführung von kommeriellen Transaktionen zunehmend an Bedeutung. Die zumeist am Anfang eines entsprechenden Vorgangs erforderliche Identifizierung einer Person zielt darauf ab, die Identität der betreffenden Person festzustellen. Unter Authentifizierung ist im allgemeinen ein der Identifizierung nachgeschalteter Kontrollvorgang zu verstehen, mittels dessen überprüft wird, ob die von der Person im Rahmen der Identifizierung gemachten Angaben richtig sind; es handelt sich mithin gewissermaßen um eine Echtheitsprüfung bezüglich der betreffenden Person.

Bisher im Zahlungsverkehr üblich sind zwei "Token"-basierte Verfahren, wobei hier als "Token" im Indentifizierungs-/Authentifizierungsprozeß verwendete Schlüsselgegenstände, d.h. vor allem die gängigen Magnet- oder Chip-Karten bezeichnet werden. Möchte der Kunde bezahlen, so identifiziert er sich mit seiner Bank- oder Kreditkarte, auf der die Unterschrift des Kunden abgebildet, sowie eine bestimmungsgemäß nur dem Kunden bekannte, meist vierstellige persönliche Identifikationsnummer (PIN) gespeichert ist.

Im ersten üblichen Verfahren hat der Kunde unter Aufsicht des Verkaufspersonals eine Unterschrift zu leisten, und die Authentifizierung erfolgt durch Vergleich der geleisteten Unterschrift des Kunden mit der auf der Karte abgebildeten Unterschrift nach Augenschein, einer Methode, die sich teils aufgrund ihr immanenter Mängel, wie etwa mit unterschiedlichen Schreibgeräten und auf unterschiedlichen Unterlagen anders ausfallenden, häufig nicht allzuschwer nachzuahmenden Schriftzügen, teils aufgrund von Nachlässigkeiten des die Unterschriften in Augenschein nehmenden Verkaufspersonals häufig als unzuverlässig herausstellt.

Durch betrügerisch agierendes Personal, beispielsweise in einem Restaurant, kommt es zudem mitunter vor, daß - vom Kunden unbemerkt - innerhalb eines kurzen Zeitraums von dessen Kreditkarte eine illegale Kopie gezogen wird, um letztere später für vom Kunden unerwünschte Transaktionen auf seine Kosten einzusetzen.

Im zweiten üblichen Verfahren authentifiziert sich der Kunde durch verdeckte Eingabe seiner PIN in ein beim Waren- oder Dienstleistungsanbieter installiertes Kartenlesegerät, welches über ein Kommunikationsnetzwerk mit dem die gewünschte Transaktion ausführenden Institut verbunden ist, und diese Transaktion authorisiert, wenn die vom Kunden eingegebene PIN mit der auf der Karte gespeicherten PIN übereinstimmt.

Das Prinzip der persönlichen Identifikationsnummer weist jedoch eine Reihe von Nachteilen auf, von denen einige in der Folge kurz dargelegt werden.

So muß die nicht kontextbezogene, sondern rein willkürlich vorgegebene PIN von der betreffenden Person üblicherweise an einem vermeintlich sicheren Platz, beispielsweise auf einem Notizblock oder in einem Terminkalender, aufgeschrieben werden, da ansonsten die Gefahr besteht, daß die Person ihre persönliche Identifikationsnummer im Laufe der Zeit vergißt. Dieses Aufschreiben der persönlichen Identifikationsnummer ist jedoch insofern riskant, als natürlich jederzeit die Gefahr des Verlustes des Notizblocks oder Terminkalenders besteht. Ein derartiger Verlust hat zur Folge, daß die persönliche Identifikationsnummer für die Person unwiederbringlich verloren ist, so daß zumeist unter unverhältnismäßig großem verwaltungstechnischem und damit auch zeitlichem und oft finanziellen Aufwand die Ausstellung einer neuen Bank- oder Kreditkarte mit einer neuen persönlichen Identifikationsnummer beantragt werden muß.

Zudem besteht die Gefahr des Mißbrauchs, wenn ein Dritter eine PIN oder ein Kenn-bzw. Paßwort erfährt, indem er beispielsweise den Inhaber bei deren Eingabe unbemerkt beobachtet oder Dokumente wie etwa Notizbücher oder Terminkalender, in denen gemeinhin derartige persönliche Identifikationsnummern aufgeschrieben werden, zusammen mit der Bank- oder Kreditkarte stiehlt oder nach Verlust durch die berechtigte Person findet und unerlaubt verwendet.

Häufig notieren Verbraucher unvernüftigerweise gar ihre PIN auf der Bank- oder Kreditkarte, so daß ein Dieb mit dem Stehlen der Karte automatisch auch in Besitz der ihn zu einer fälschlichen Authentifizierung befähigenden PIN gelangt. Auch läßt sich nicht ausschließen, daß ein Kartendieb durch den Einsatz elektronischer Hilfsmittel zur Kenntnis der auf der Karte gespeicherten PIN gelangt.

Eine neuere Klasse von Authentifizierungsverfahren sind die sogenannten biometrischen Methoden, die sich der elektronischen Auswertung physiologischer Merkmale wie z.B. des Fingerabdrucks, des Iris-Musters des Auges oder der individuellen Merkmale der Stimme (des sogenannten "voiceprints") bedienen mit dem Vorteil, daß weder irgendwelche Karten oder sonstige Tokens mitgeführt werden müssen.

In WO 98/09227 sind ein Verfahren und ein System zur Authorisierung kommerzieller Transaktionen zwischen einem Käufer und einem Verkäufer ohne Verwendung eines Authentisierungstokens offenbart, wobei der Käufer die Annahme eines Angebots des Verkäufers zur Durchführung der Transaktion durch Eingabe seiner persönlichen Authentifizierungsinfomiation, bestehend aus einer PIN und einer oder mehreren biometrischen Probe(n), signalisiert, welche zu einem Computersystem übermittelt wird, das die eingegangene Authentifizierungsinformation mit den in einem Registrierschritt erfaßten biometrischen Proben des Käufers vergleicht. Wenn das Computersystem den Käufer erfolgreich indentifiziert, wird ein Konto des Käufers um einen Betrag belastet, der einem Konto des Verkäufers gutgeschrieben wird, und das Ergebnis der Transaktion wird sowohl dem Verkäufer als auch dem Käufer übermittelt.

Als mögliche zu verwendende biometrische Proben werden ein Fingerabdruck des Käufers, eine Aufnahme der Iris des Käufers und eine Stimmprobe des Käufers aufgeführt. Für den Fall des Diebstahls der biometrischen Information, im Falle des Einsatzes einer Stimmprobe beispielsweise als heimliches Aufzeichnen der Stimme des Käufers vorstellbar, ist in WO 98/09227 als Gegenmittel eine Änderung der PIN des Käufers vorgesehen, der die biometrische Information im Speicher des Computersystems zugeordnet ist. Das bedeutet, daß nach erfolgtem Diebstahl der biometrischen Information die PIN nicht nur die Aufgabe der Identifikation des Käufers, sondern mittelbar auch die der Authentifizierung übernimmt. Bei einer endlichen Anzahl n an Stellen der PIN ist es also möglich, mit höchstens 10" Versuchen unter Benutzung der gestohlenen biometrischen Information eine fehlerhafte Authentifizierung und somit eine erschlichene Transaktion zu erreichen.

Generell ist zu bedenken, daß über ein öffentliches Kommunikationsnetzwerk kommunizierende Computersysteme stets der Gefahr durch potentielle Manipulationen unbefugt ins System eindringender Dritte ausgesetzt sind. Beim Versuch, sich über ein öffentlich zugängliches Netzwerk unbefugt Zugang zu einem Computersystem zu verschaffen, erfolgt häufig ein permanent wiederholtes, automatisiertes Daueranwählen (sogn. *Spamming)* des angegriffenen Systems durch den Manipulateur. Selbst wenn es hierdurch nicht gelingen sollte, in das angegriffene System einzudringen, so stellt das Daueranwählen doch eine Beeinträchtigung der Kommunikation des angegriffenen Systems dar und kann bis zum Erliegen der regulären Verbindungsvorgänge führen, d.h. die Abwicklung ordnungsgemäßer Transaktionen könnte zum Erliegen kommen.

Um Manipulationen vorzubeugen ist es auch wünschenswert, daß das verkäuferseitig installierte elektronische Kommunikationsmittel einer Authentisierung durch das die Transaktion vornehmende Computersystem unterliegt.

Die Aufgabe der vorliegenden Erfindung ist es, ein Verfahren und ein System zur Authorisierung kommerzieller Transaktionen zwischen einem Käufer und einem Verkäufer zu schaffen, welche einen erhöhten Schutz gegen Verwendung widerrechtlich beschaffter biometrischer Proben eines als Käufer Registrierten durch einen Dritten sowie gegen elektronische Angriffe mittels automatisierter Daueranwahl, sogenanntes *spamming,* bieten, welche darüberhinaus ohne den Einsatz einer PIN mit den obenbeschriebenen Nachteilen auskommen, eine sichere Identifizierung und Authentifizierung des Verkäuferanschlusses gewährleisten, und welche zudem mit überschaubarem technischen Aufwand zu implementieren sind.

Diese Aufgabe wird dadurch gelöst, daß ein Verfahren und ein System zur Authorisierung einer kommerziellen Transaktion zwischen einem Kunden und einem Waren- oder Dienstleistungsanbieter durch einen Authorisierungsdlenstleister mit Authentifizierung des Kunden durch Vergleich einer biometrischen Probe des Kunden mit einem beim Authorisierungsdienstleister gespeicherten biometrischen Muster des Kunden geschaffen wird, wobei eine Telefonverbindung zwischen dem Anbieter und dem Authorisierungsdienstleister über einen Router aufgebaut wird, der einer virtuellen Telefonnummer die reale Telefonnummer des Authorisierungsdienstleisters zuweist sowie die Telefonnummer des Anbieters und einen Code überträgt, der zeitgleich durch den Router und den Authorisierungsdienstleister mit Hilfe desselben Algorithmus errechnet wird, die Telefonverbindung durch den Authorisierungsdienstleister angenommen wird, wenn der Anbieter unter der übertragenen Telefonnummer beim Authorisierungsdienstleister registriert ist, und der übertragene Code mit dem beim Authorisierungsdienstleister errechneten Code übereinstimmt, eine der Identifizierung des Kunden dienende Kennung sowie eine biometrischen Probe des Kunden vom Kunden zum Authorisierungsdienstleister über die aufgebaute Telefonverbindung übermittelt werden, ferner die Höhe des zu transferierenden Betrages und etwaige weitere für die Transaktion benötigte Daten vom Kunden zum Authorisierungsdienstleister über die aufgebaute Telefonverbindung übermittelt werden, und die Einleitung der Transaktion durch den Authorisierungsdienstleister dann erfolgt, wenn die Übereinstimmung zwischen der biometrischen Probe und dem gespeicherten biometrischen Muster des Kunden größer als ein vorbestimmter Schwellenwert ist.

Unter einer Telefonverbindung ist in diesem Zusammenhang eine Verbindung über ein zur Telefonie geeignetes Netzwerk oder Funknetzwerk gemeint, entsprechend ist unter einem Telefon allgemein eine zur Telefonie geeignete Vorrichtung zu verstehen, und ein Telefonnetz bezeichnet ein zur Telefonie geeignetes Netzwerk oder Funknetzwerk, beispielsweise ein ISDN- oder UMTS-Netz oder das Internet.

Ein Vorteil der Erfindung ist, daß der Kunde kein irgendwie geartetes "Token", beispielsweise eine Speicherkarte, mit sich führen muß, ein Bezahlungsvorgang jedoch ebenso komfortabel wie mit einer herkömmlichen Kreditkarte abläuft, so die Erfindung also gleichsam wie eine "virtuelle Kreditkarte" ohne das Risiko des Verlusts durch Diebstahl oder Verlieren wirkt.

In einer bevorzugten Ausführungsform der Erfindung ist die biometrische Probe eine vom Kunden nachgesprochene Wortfolge, die dem Kunden zuvor vom Authorisierungsdienstleister über die aufgebaute Telefonverbindung übermittelt worden ist, das gespeicherte biometrische Muster ist ein Stimmuster des Kunden, die Prüfung auf Übereinstimmung zwischen der nachgesprochenen Wortfolge und dem gespeicherten Stimmuster wird hinsichtlich für einen Sprecher charakteristischer individueller Stimmerkmale durchgeführt, und die Einleitung der Transaktion durch den Authorisierungsdienstleister erfolgt nur dann, wenn sich die nachgesprochene Wortfolge aus denselben Wörtern in derselben Reihenfolge zusammensetzt wie die vorgegebene Wortfolge. Hierbei ist die Wortfolge dem Teilnehmer vor Beginn des Authentifizierungsvorgangs nicht bekannt und ändert sich für jeden erneuten Authentifizierungsvorgang, so daß nicht mißbräuchlich Sprachaufzeichnungen zur Authentifizierung verwendet werden können.

Ein Vorteil dieser Ausführungsform der Erfindung ist, daß das unbefugte Abhören oder Mitschneiden eines Authentifizierungsvorgangs kein Sicherheitsrisiko mehr darstellt, da sich die zur Authentifizierung nachzusprechende Wortfolge für jeden erneuten Authentifizierungsvorgang ändert. Ein weiterer Vorteil dieser Ausführungsform der Erfindung ist, daß durch die Nutzung des Telefons zur Eingabe der zur Authentifizierung dienenden Stimmprobe teilnehmerseitig keine aufwendigen Zusatzinstallationen, wie etwa ein Fingerabdruck-Scanner, erforderlich sind.

In einer weiteren vorteilhaften Ausführungsform der Erfindung benützt der Kunde zur Übermittlung der biometrischen Probe ein anbieterseitig installiertes Bildtelefon, wobei die biometrischen Probe das elektronische Bild des Gesichts des Kunden ist, mit der gespeicherten elektronischen Aufnahme des Gesichts des Kunden als biometrischem Muster verglichen wird.

In einer bevorzugten erfindungsgemäßen Ausführungsform erfolgt die Eingabe der Kennung sowie der für die Transaktion benötigten Daten durch Spracheingabe. Vorteilhafterweise ist die Kennung der Name des Kunden, so daß sich der Kunde kein Nummer oder derleichen merken muß.

In einer weiteren vorteilhaften Ausführungsform der Erfindung wird die Einleitung der Transaktion dem Anbieter vom Authorisierungsdienstleister unmittelbar mitgeteilt, beispielsweise durch eine Faxnachricht, eine E-Mail oder SMS (Short-Message-Service)-Nachricht, so daß dieser beispielsweise eine Ware sofort an den Kunden übergeben kann mit der Gewißheit, daß die entsprechende Zahlung bereits erfolgt ist. Vorteilhafterweise wird auch dem Käufer die Einleitung der Transaktion vom Authorisierungsdienstleister unmittelbar bestätigt, und zwar vorzugsweise über die bereits aufgebaute Telefonverbindung.

Um elektronische Daueranwahl des Authorisierungsdienstleisters durch unberechtigte Dritte zu vermeiden, wird vorzugsweise für jeweilige neue Authorisierungsvorgänge die Verbindung zum Authorisierungsdienstteister über einen elektronischen Vermittler mittels eines virtuellen Switches an regelmäßig, beispielsweise alle 15 Minuten, wechselnde reale Telefonnummern des Authorisierungsdienstleisters vermittelt. Der Einsatz eines solchen virtuellen Switches hat auch den Vorteil, daß die Verbindungssicherheit erhöht ist, wenn Beispielsweise Bereiche des öffentlichen Telefonnetzwerks durch einen Defekt ausfallen.

Die Erfindung hat den Vorteil, daß sich für den Kunden der Registrierungsvorgang, d.h. der Vorgang der erstmaligen Hinterlegung einer Stimmprobe als Referenz-Stimmuster bzw. die Aufnahme des Gesichts des Kunden sehr einfach und zugleich äußerst sicher gestalten kann, beispielsweise telefonisch bzw. bildtelefonisch von einem Bank-, Post- oder Behördenschalter aus, nachdem man sich dort ausgewiesen hat. Das entsprechende Institut oder die entsprechende Behörde bestätigt den Registrierungsvorgang anschließend dem Authorisierungsdienstleister. Auch ist beispielsweise eine telefonische Registrierung von zu Hause aus mit anschließender schriftlicher Bestätigung denkbar.

Die vorliegende Erfindung wird im folgenden unter Zuhilfename der Zeichnungen beispielhaft näher erläutert. Hierbei zeigt
- Fig.1: eine schematische Darstellung eines erfindungsgemäßen Ausführungsbeispiels eines Systems zur Authorisierung einer kommerziellen Transaktion zwischen einem Kunden und einem Waren- oder Dienstleistungsanbieter,
- Fig.2a, Fig.2b: eine in Form eines Ablaufplans schematisierte Darstellung der Abläufe bei der Authentifizierung im Rahmen eines erfindungsgemäßen Ausführungsbeispiels des Verfahrens.

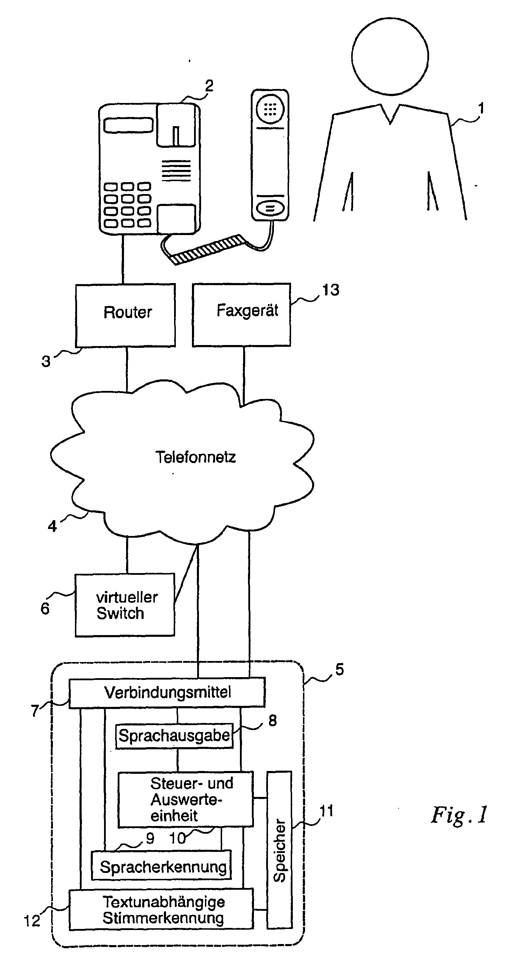

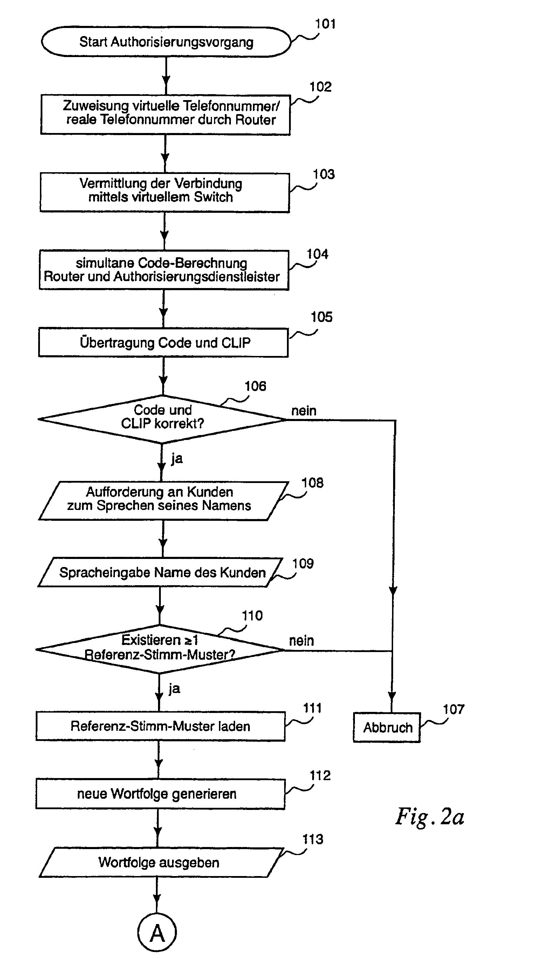

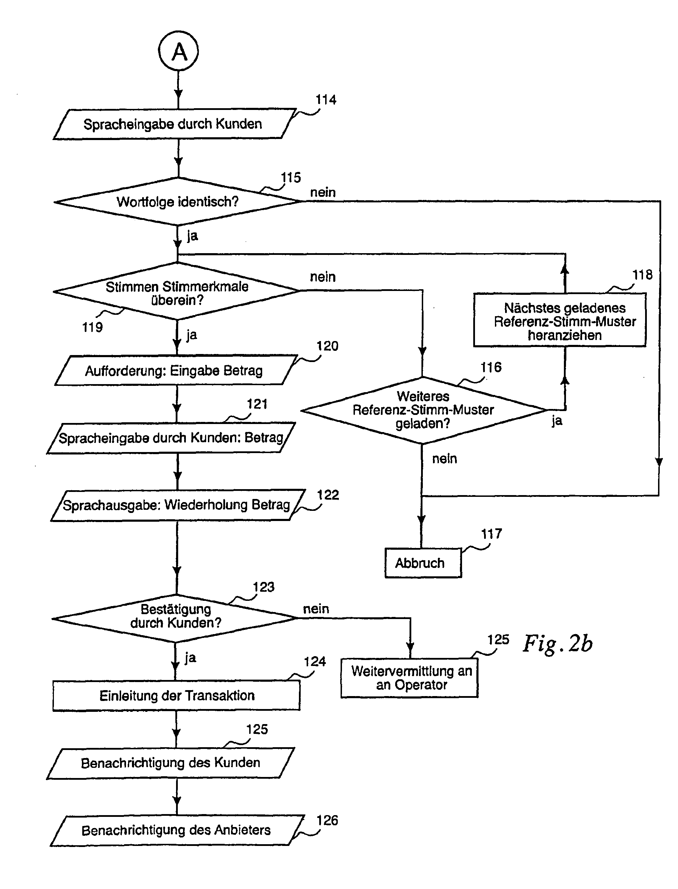

Beschrieben wird im folgenden die Authorisierung einer kommerziellen Transaktion zwischen einem Kunden und einem Waren- oder Dienstleistungsanbieter durch einen Authorisierungsdienstleister mit Authentifizierung des Kunden durch Vergleich einer Stimmprobe mit einem beim Authorisierungsdienstleister gespeicherten Stimmuster anhand des in Fig.1 schematisch dargestellten Ausführungsbeispiels eines erfindungsgemäßen Systems nach dem in Fig.2a und 2b schematisch dargestellten Ablauf einer erfindungsgemäßen Ausführungsform des Verfahrens.

Der zahlungswillige Kunde 1 wird an der Telefonanlage 2 des Waren- oder Dienstleistungsanbieters durch einen anbieterseitig installierten Router 3 über das Telefonnetz 4 mit dem Authorisierungsdienstleister 5 verbunden. Hierbei weist der Router 3 zur Anwahl des Authorisierungsdienstleisters 5 einer virtuellen Telefonnummer die reale Telefonnummer des Authorisierungsdienstleisters 5 zu (Schritt 102 in Fig.2a). Die Verbindung zum Authorisierungsdienstleister 5 wird über einen elektronischen Vermittler mittels eines virtuellen Switches 6 an die reale Telefonnummer des Authorisierungsdienstleisters 5 vermittelt (Schritt 103 in Fig.2a), die regelmäßig, beispielsweise alle 15 Minuten, wechselt, um elektronische Daueranwahl des Authorisierungsdienstleisters 5 durch unberechtigte Dritte, sogenanntes Spamming, zum vermeiden. Zunächst wird die Nummer der Anbietertelefonanlage 2 als sogenannter CLIP (Calling Line Identification Presentation) sowie ein vom anbieterseitig installierten Router 3 errechneter Code (Schritt 105 in Fig.2a), der simultan auch von einem Verbindungsmittel 7 des Authorisierungsdienstleisters 5 mit dem gleichen Algorithmus erzeugt wird (Schritt 104 in Fig.2a) zum Authorisierungsdienstleister 5 übertragen. Das Verbindungsmittel 7 des Authorisierungsdienstleisters 5 überprüft Code und CLIP (Schritt 106 in Fig.2a) und akzeptiert die Verbindung nur dann, wenn der CUP einem in einem Speicher 11 des Authorisierungsdienstleisters 5 abgelegten Datensatz eines beim Authorisierungsdienstleister 5 registrierten Anbieter zuordenbar ist, und wenn der übertragene Code mit dem beim Authorisierungsdienstleister 5 errechneten Code übereinstimmt. Ist dies nicht gegeben, wird die Verbindung nicht akzeptiert (Schritt 107 in Fig.2a). Andernfalls wird der Kunde 1 über eine Sprachausgabe 8 aufgefordert, seinen vollen Namen (Vor- und Nachname) zu sprechen (Schritt 108 in Fig.2a).

Der Kunde 1 spricht am Telefon 2 seinen vollen Namen (Schritt 109 in Fig.2a), der über das Telefonnetz übermittelt 4 und vom Verbindungsmittel 7 empfangen wird. Eine beim Authorisierungsdienstleister 5 implementierte Spracherkennung 8 überführt das digitalisierte Klangbild des Namens des Kunden 1 in den Namen des Kunden. Eine Steuer- und Auswerte-Einheit 10 überprüft, ob ein im Speicher 11 abgelegtes Referenzstimmuster existiert, das dem angegebenen Namen zuordenbar ist (Schritt 110 in Fig.2a). Falls dies nicht der Fall ist, so wird das Authentifizierungsverfahren abgebrochen (Schritt 107 in Fig.2a) bzw. der Kunde 1 mit einem Operator verbunden, der gegebenenfalls weitere Schritte, beispielsweise die Beseitigung technischer Probleme, einleitet. Existiert ein Referenzstimmuster Im Speicher 11, das dem angegebenen Namen zuordenbar ist, so wird dieses Referenzstimmuster aus dem Speicher geladen (Schritt 111 in Fig.2a). Existieren aufgrund von Namensgleichheiten mehrere Stimmuster, die dem Namen zuordenbar sind, so werden diese geladen. Da der Kunde 1 seinen vollen Namen genannt hat, ist eine hohe Zahl an in Frage kommenden Stimmustern unwahrscheinlich.

Die Steuer- und Auswerte-Einheit 10 generiert über die Sprachausgabe 8 eine dem Kunden 1 zuvor nicht bekannte Wortfolge (Schritt 112 in Fig.2a), die über das Telefonnetz 4 zum Kunden 1 übertragen wird (Schritt 113 in Fig.2a). Der Kunde 1 spricht die Wortfolge am Telefon 2 als Stimmprobe nach (Schritt 114 in Fig.2b), die über das Telefonnetz 4 übermittelt und vom Verbindungsmittel 7 des Authorisierungsdienstleisters 5 empfangen wird. Die beim Authorisierungsdienstleister 5 implementierte Spracherkennung 9 analysiert, ob sich die digitalisierte Wortfolge aus denselben Wörtern in derselben Reihenfolge zusammensetzt wie die von der Steuer- und Auswerteeinheit 10 über die Sprachausgabe 8 generierte Wortfolge (Schritt 115 in Fig.2b). Ist dies nicht der Fall, so wird das Authorisierungsverfahren abgebrochen (Schritt 117 in Fig.2b) bzw. der Kunde 1 mit einem Operator verbunden, der gegebenenfalls weitere Schritte, beispielsweise die Beseitigung technischer Probleme, einleitet. Andernfalls wird es fortgesetzt.

Eine beim Authorisierungsdienstleister 5 implementierte textunabhängige Stimmerkennung 12 vergleicht die digitalisierte Wortfolge mit dem geladenen, bzw., falls aufgrund von Namensgleichheiten mehrere Stimmuster geladen wurden, dem ersten geladenen Referenzstimmuster in Hinblick auf für einen Sprecher charakteristische individuelle Stimmerkmale (Schritt 119 in Fig.2b). Ist die Übereinstimmung zwischen der digitalisierten Wortfolge und dem Referenzstimmuster des Kunden 1 in Hinblick auf für einen Sprecher charakteristische individuelle Stimmerkmale kleiner als ein vorbestimmter Schwellenwert, so überprüft die Steuer- und Auswerte-Einheit ob ein weiteres geladenes Referenzstimmuster existiert (Schritt 116 in Fig.2b). Existiert kein weiteres geladenes Referenzstimmuster, so wird das Authorisierungsverfahren abgebrochen (Schritt 117 in Fig.2b) bzw. der Kunde 1 mit einem Operator verbunden, der gegebenenfalls weitere Schritte, beispielsweise die Beseitigung technischer Probleme, einleitet.

Ist die Übereinstimmung zwischen der digitalisierten Wortfolge und dem Referenzstimmuster des Kunden in Hinblick auf für einen Sprecher charakteristische individuelle Stimmerkmale zwar kleiner als ein vorbestimmter Schwellenwert, existieren jedoch weitere geladene Referenzstimmuster, so wird das nächste geladene Referenzstimmuster herangezogen (Schritt 118 in Fig.2b) und auf für einen Sprecher charakteristische individuelle Stimmerkmale untersucht (Schritt 119 in Fig.2b). Gegebenenfalls wird diese Schleife mehrfach durchlaufen, bis entweder kein weiteres geladenes Stimmuster existiert oder die Übereinstimmung zwischen der digitalisierten Wortfolge und dem Referenzstimmuster des Kunden in Hinblick auf für einen Sprecher charakteristische individuelle Stimmerkmale größer als ein vorbestimmter Schwellenwert ist.

Wenn die Übereinstimmung zwischen der digitalisierten Wortfolge und dem Referenzstimmuster des Kunden 1 in Hinblick auf für einen Sprecher charakteristische individuelle Stimmerkmale größer als ein vorbestimmter Schwellenwert ist, so wird über die Sprachausgabe 8 eine Aufforderung generiert, die Höhe des zu transferierenden Betrages und gegebenenfalls weitere für die zu authorisierende Transaktion erforderliche Daten zu nennen (Schritt 120 in Fig.2b), und über das Telefonnetz 4 zum Kunden 1 übertragen. Der Kunde 1 nennt am Telefon 2 die Höhe des zu transferierenden Betrages und gegebenenfalls weitere für die zu authorisierende Transaktion erforderliche Daten (Schritt 121 in Fig.2b). Diese werden über das Telefonnetz 4 übertragen, vom Verbindungsmittel 7 empfangen und von der Spracherkennung 9 in eine von der Steuer- und Auswerteeinheit 10 verarbeitbare Form übersetzt.

Die Steuer- und Auswerteeinheit 10 generiert über die Sprachausgabe 8 eine Wiederholung des Betrages (Schritt 122 in Fig.2b) verbunden mit der Rückfrage an den Kunden, ob die Höhe des zu transferierenden Betrages und die gegebenenfalls weiteren für die zu authorisierende Transaktion erforderlichen Daten richtig verstanden wurden. Diese Rückfrage wird über das Telefonnetz 4 zum Kunden 1 übertragen. Bestätigt dieser die Richtigkeit der Angaben (Schritt 123 in Fig.2b), so wird die Transaktion von der Steuer- und Auswerteeinheit 10 eingeleitet (Schritt 124 in Fig.2b), der Kunde 1 wird darüber durch eine von der Sprachausgabe 8 generierte Nachricht über das Telefonnetz 4 benachrichtigt (Schritt 125 in Fig.2b), der Anbieter erhält eine sofortige Nachricht über die Einleitung der Transaktion auf seinem Faxgerät 13 (Schritt 126 in Fig.2b). Andernfalls wird der Kunde 1 mit einem Operator verbunden, der dann die entsprechenden Schritte zur Authorisierung der Transaktion einleiten kann.

## Patentansprüche

1. Verfahren zur Autorisation einer Transaktion eines Kunden durch einen Autorisierungsdienstleister, wobei der Autorisierungsdienstleister in einem Speicher ein einer Kennung des Kunden zugeordnetes Referenzstimmmuster des Kunden gespeichert hat, umfassend:
Aufbauen einer Kommunikationsverbindung zwischen einem Kunden und dem Autorisierungsdienstleister;
Übermitteln einer Kennung von dem Kunden zu dem Autorisierungsdienstleister;
Übermitteln einer vom Autorisierungsdienstleister erzeugten, dem Kunden vorher nicht bekannten Wortfolge an den Kunden;
Nachsprechen der Wortfolge und übermitteln der nachgesprochenen Wortfolge von dem Kunden an den Autorisierungsdienstleister;
Vergleichen der nachgesprochenen Wortfolge und des der übermittelten Kennung zugeordneten gespeicherten Referenzstimmmusters auf Übereinstimmung hinsichtlich charakteristischer Stimmmerkmale;
Autorisieren einer Transaktion des Kunden, wenn die Übereinstimmung zwischen der nachgesprochenen Wortfolge und des der übermittelten Kennung zugeordneten gespeicherten Referenzstimmmusters größer als ein vorbestimmter Schwellenwert ist.

2. Autorisierungsdienstleister zur Autorisation einer Transaktion eines Kunden, wobei der Autorisierungsdienstleister umfasst:
einen Speicher zum Speichem einer Kennung und eines Referenzstimmmusters für einen Kunden;
Mittel zum Aufbauen einer Kommunikationsverbindung mit einem Kunden;
Mittel zum Empfangen einer Kennung von dem Kunden;
Mittel zum Übermitteln einer erzeugten Wortfolge an den Kunden, die dem Kunden vorher nicht bekannt ist;
Mittel zum Empfangen der von dem Kunden nachgesprochenen Wortfolge;
Mittel zum Vergleichen der nachgesprochenen Wortfolge und des der empfangenen Kennung zugeordneten gespeicherten Referenzstimmmusters auf Übereinstimmung hinsichtlich charakteristischer Stimmmerkmale;
Mittel zum Autorisieren einer Transaktion des Kunden, wenn die Übereinstimmung zwischen der nachgesprochenen Wortfolge und des der übermittelten Kennung zugeordneten gespeicherten Referenzstimmmusters größer als ein vorbestimmter Schwellenwert ist.

3. Verfahren zur Autorisierung einer kommerziellen Transaktion zwischen einem Kunden (1) und einem Waren- oder Dienstleistungsanbieter durch einen Autorisierungsdienstleister (5) mit Authentifizierung des Kunden durch Vergleich einer biometrischen Probe des Kunden (1) mit einem beim Autorisierungsdienstleister (5) gespeicherten biometrischen Muster des Kunden (1),
**dadurch gekennzeichnet,**
**dass** der Autorisierungsvorgang die Schritte
(a) Aufbau einer Telefonverbindung über ein Kommunikationsnetzwerk (4) zwischen dem Anbieter und dem Autorisierungsdienstleister über einen Router (3),
wobei der Router (3)
einer virtuellen Telefonnummer die reale Telefonnummer des Autorisierungsdienstleisters (5) zuweist (102)
sowie die Telefonnummer des Anbieters und einen Code überträgt (105), der zeitgleich durch den Router (3) und den Autorisierungsdienstleister (5) mit Hilfe desselben Algorithmus errechnet wird (104),
(b) Annahme der Telefonverbindung durch den Autorisierungsdienstleister (5), wenn der Anbieter unter der übertragenen Telefonnummer beim Autorisierungsdienstleister (5) registriert ist und der übertragene Code mit dem beim Autorisierungsdienstleister (5) errechneten Code übereinstimmt (106),
(c) Übermittlung einer der Identifizierung des Kunden dienenden Kennung vom Kunden (1) zum Autorisierungsdienstleister (5) über die aufgebaute Telefonverbindung (109),
(d) Übermittlung einer biometrischen Probe des Kunden (1) über die aufgebaute Telefonverbindung (114),
(e) Übermittlung der Höhe des zu transferierenden Betrages (121) und etwaiger weiterer für die Transaktion benötigter Daten vom Kunden (1) zum Autorisierungsdienstleister (5) über die aufgebaute Telefonverbindung,
(f) Einleitung der Transaktion (124) durch den Autorisierungsdienstleister (5), wenn die Übereinstimmung zwischen der biometrischen Probe und dem gespeicherten biometrischen Muster des Kunden (1) größer als ein vorbestimmter Schwellenwert ist, aufweist.

4. Verfahren nach Anspruch 3,
**dadurch gekennzeichnet,**
**dass** die biometrische Probe eine vom Kunden (1) nachgesprochene Wortfolge ist, die dem Kunden (1) zuvor vom Autorisierungsdienstleister (5) über die aufgebaute Telefonverbindung übermittelt worden ist,
das gespeicherte biometrische Muster ein Stimmmuster des Kunden (1) ist,
die Prüfung auf Übereinstimmung zwischen der nachgesprochenen Wortfolge und dem gespeicherten Stimmmuster hinsichtlich für einen Sprecher charakteristischer individueller Stimmmerkmale durchgeführt wird (119),
und die Einleitung der Transaktion durch den Autorisierungsdienstleister (5) nur dann erfolgt, wenn sich die nachgesprochene Wortfolge aus denselben Wörtern in derselben Reihenfolge zusammensetzt wie die vorgegebene Wortfolge,
wobei die Wortfolge dem Kunden (1) vor Beginn des jeweiligen Autorisierungsvorgangs nicht bekannt ist.

5. Verfahren nach Anspruch 3 oder 4,
**dadurch gekennzeichnet,**
**dass** die Kennung der Name des Kunden (1) ist.

6. Verfahren nach einem der Ansprüche 3 bis 5,
**dadurch gekennzeichnet,**
**dass** die Einleitung der Transaktion dem Anbieter vom Autorisierungsdienstleister (5) unmittelbar mitgeteilt wird (126).

7. Verfahren nach einem der Ansprüche 3 bis 6,
**dadurch gekennzeichnet,**
**dass** die Einleitung der Transaktion dem Kunden (1) vom Autorisierungsdienstleister (5) unmittelbar über die aufgebaute Telefonverbindung bestätigt wird (125).

8. Verfahren nach einem der Ansprüche 3 bis 7,
**dadurch gekennzeichnet,**
**dass** für jeweilige neue Autorisierungsvorgänge die Verbindung zum Autorisierungsdienstleister (5) über einen elektronischen Vermittler (6) an regelmäßig wechselnde reale Telefonnummern des Autorisierungsdienstleisters (5) vermittelt wird (103), um elektronische Daueranwahl des Autorisierungsdienstleisters (5) durch unberechtigte Dritte zum vermeiden und die Verbindungssicherheit zu erhöhen.

9. System zur Autorisierung einer kommerziellen Transaktion zwischen einem Kunden (1) und einem Waren- oder Dienstleistungsanbieter durch einen Autorisierungsdienstleister (5) mit Authentifizierung des Kunden (1) durch Vergleich einer biometrischen Probe des Kunden (1) mit einem beim Autorisierungsdienstleister (5) gespeicherten biometrischen Muster des Kunden,
**dadurch gekennzeichnet,**
**dass** das System anbieterseitig einen Router (3) aufweist, der einer virtuellen Telefonnummer die reale Telefonnummer des Autorisierungsdienstleisters zuweist, einen Code errechnet, sowie die Telefonnummer des Anbieters und den Code überträgt,
das System ferner dienstleisterseitig ein Verbindungsmittel (7) aufweist, das simultan mit dem Router mit dem gleichen Algorithmus einen Code errechnet, und
das beim Aufbau einer Verbindung zwischen dem Anbieter und dem Autorisierungsdienstleister (5) überprüft, ob der Anbieter unter der von dem Router (3) übertragenen Telefonnummer beim Autorisierungsdienstleister (5) registriert ist, und ob der vom Router (3) übertragene Code mit dem vom Verbindungsmittel (7) berechneten Code übereinstimmt, und das über die aufgebaute Telefonverbindung eine Kennung des Kunden (1), ein biometrisches Muster des Kunden und die Höhe des zu transferierenden Betrages empfängt,
das System ferner dienstleisterseitig einen Speicher (11) aufweist, in welchem ein biometrisches Muster des Kunden (1) gespeichert ist,
das System ferner dienstleisterseitig Vergleichsmittel (12) aufweist, welche die Übereinstimmung zwischen der biometrischen Probe und dem gespeicherten biometrischen Muster des Kunden (1) überprüfen,
das System ferner dienstleisterseitig eine Steuer- und Auswerteeinheit (10) aufweist, welche die Transaktion einleitet, wenn die Übereinstimmung zwischen der biometrischen Probe und dem gespeicherten biometrischen Muster des Kunden (1) größer als ein vorbestimmter Schwellenwert ist.

10. System nach Anspruch 9,
**dadurch gekennzeichnet,**
**dass** das System eine Spracherkennung aufweist,
die Vergleichsmittel eine textunabhängige Stimmerkennung (11) aufweisen,
die biometrischen Probe eine vom Kunden (1) nachgesprochene Wortfolge ist, die zuvor von der Steuer- und Auswerteeinheit (10) generiert und von dem Verbindungsmittel (7) an den Kunden (1) übermittelt worden ist,
das gespeicherte biometrische Muster ein Stimmmuster des Kunden (1) ist,
und die textunabhängige Stimmerkennung die Prüfung auf Übereinstimmung zwischen der nachgesprochenen Wortfolge und dem gespeicherten Stimmmuster hinsichtlich für einen Sprecher charakteristischer individueller Stimmmerkmale durchführt,
und die steuer- und Auswerteeinheit die Transaktion (10) nur dann einleitet, wenn sich die nachgesprochene Wortfolge aus denselben Wörtern in derselben Reihenfolge zusammensetzt wie die zuvor generierte Wortfolge,
wobei die Wortfolge dem Kunden (1) vor Beginn des jeweiligen Autorisierungsvorgangs nicht bekannt ist.
